# DEMANDE DE BREVET EUROPEEN

(11) **EP 1 876 755 A1**
(43) Date de publication de la demande: **09.01.2008**
(21) Numéro de dépôt: 07011763.5
(22) Date de dépôt: 15.06.2007
(51) Int. Cl.: H04L 12/18

(54) **Procédé de communication prévoyant de communiquer des informations spécifiques en cas d'activation d'une séquence en mode restreint**

(30) Priorité: 03.07.2006 FR 0652768
(71) Demandeur: Alcatel Lucent, 75008 Paris (FR)
(72) Inventeur: Colin, Jean-Michel, 67000 Strasbourg (FR); Sauve, Franck, 67115 Plobsheim (DE)
(74) Mandataire: Hedarchet, Stéphane

(57) **Abrégé**

L'invention concerne un procédé de communication d'informations multimédia entre aux moins deux terminaux connectés à un réseau, ledit procédé prévoyant ;
- au moins une séquence de communication en mode restreint dans laquelle au moins une des informations multimédia n'est pas communiquée ; et, en cas d'activation de la séquence de communication en mode restreint d'au moins un terminal, de :
- communiquer à au moins un autre terminal des informations préenregistrées à la place des informations multimédia non communiquées ;

dans lequel les informations préenregistrées sont sélectionnées en fonction du terminal auxquelles elles sont adressées.

## Description

L'invention concerne un procédé de communication d'informations multimédia entre au moins deux terminaux connectés à un réseau.

L'invention s'applique en particulier mais non exclusivement à une communication d'informations audio et vidéo dans le cadre d'une visioconférence, celle-ci pouvant être établie entre deux ou plus de deux utilisateurs utilisant chacun un terminal.

Dans ce type de communication, il est connu de prévoir des séquences dans lesquelles au moins un utilisateur suspend soit la communication vidéo (séquence communément appelée « video mute » en anglais) soit la communication audio et vidéo (séquence communément appelée « hold » en anglais).

Lors de ces séquences de communication en mode restreint, les informations suspendues ne sont plus disponibles dans le réseau et les utilisateurs peuvent visualiser un écran noir ou éventuellement un icône de remplacement.

Cette méthode de gestion de ces séquences ne donne pas satisfaction en ce qu'elle peut notamment être confondue par les utilisateurs avec un incident technique de communication. Il en résulte donc une dégradation de la qualité perçue par les utilisateurs.

On connaît du document US-2005/0034079 un service de conférence qui prévoit un profil d'utilisateur décrivant un contenu spécifique qui est destiné à être communiqué aux autres utilisateurs lors d'une pause dans la communication. Toutefois, ce type de service n'est pas satisfaisant en ce qu'il ne considère pas les spécificités des utilisateurs auxquels les informations sont adressées.

L'invention a pour but de pallier les inconvénients de l'art antérieur en proposant notamment un procédé de communication d'informations multimédia entre au moins deux terminaux connectés à un réseau, ledit procédé permettant notamment de valoriser de façon optimale les séquences de communication en mode restreint.

A cet effet, l'invention propose un procédé de communication d'informations multimédia entre aux moins deux terminaux connectés à un réseau, ledit procédé prévoyant ;
- au moins une séquence de communication en mode restreint dans laquelle au moins une des informations multimédia n'est pas communiquée ; et, en cas d'activation de la séquence de communication en mode restreint d'au moins un terminal, de :
- communiquer à au moins un autre terminal des informations préenregistrées à la place des informations multimédia non communiquées ;
dans lequel les informations préenregistrées sont sélectionnées en fonction du terminal auxquelles elles sont adressées.

Ainsi, le procédé selon l'invention permet de valoriser les séquences en mode restreint tout en améliorant la convivialité de la communication entre les terminaux.

D'autres particularités et avantages de l'invention apparaîtront dans la description qui suit de différents modes de réalisation particuliers.

L'invention concerne un procédé de communication d'informations multimédia entre au moins deux terminaux connectés à un réseau. L'invention est décrite ci-dessous en relation avec un réseau de visioconférence dans lequel des images et du son sont communiqués entre les différents utilisateurs connectés au réseau.

Pour ce faire, chaque utilisateur possède un terminal, lesdits terminaux comprenant classiquement des moyens de prise d'image et de son, ainsi que des moyens de visualisation et d'écoute des informations communiquées par les autres utilisateurs. En particulier, les moyens de visualisation peuvent afficher plusieurs fenêtres dans chacune desquelles l'image communiquée par l'un des utilisateurs est visible.

En variante, le procédé suivant l'invention s'applique également dans le cadre d'une communication d'informations multimédia entre deux terminaux connectés à un réseau.

Concernant la communication des différentes informations, celle-ci peut être réalisée par l'intermédiaire d'un réseau de télécommunication mobile ou filaire, ou encore par l'intermédiaire d'un réseau Internet. Toutefois, l'invention n'est nullement limitée à un mode de communication particulier des informations multimédia, ni à un mode de réalisation des terminaux connectés au réseau de communication.

Le procédé de communication prévoit au moins une séquence de communication en mode restreint dans laquelle au moins une information n'est pas communiquée. Selon une réalisation, cette séquence de communication prévoit de ne pas communiquer l'information vidéo et/ou de ne communiquer aucune information multimédia.

Ces types de séquences, classiquement appelées respectivement « video mute » et « hold » sont prévues pour permettre à un utilisateur de suspendre la communication d'au moins certaines des informations qu'il émet pendant un laps de temps déterminé, par exemple à fin de confidentialité.

Pour ce faire, les terminaux sont équipés de moyens d'activation de chacune des séquences de communication en mode restreint qui sont disponibles, lesdits moyens étant actionnables par l'utilisateur du terminal. En outre, il peut être prévu d'activer les séquences de communication en mode restreint que pour certains utilisateurs, par exemple de manière à poursuivre une communication uniquement avec les autres utilisateurs.

Le procédé de communication prévoit, en cas d'activation d'une séquence de communication en mode restreint d'au moins un terminal, de communiquer à au moins un autre terminal des informations préenregistrées à la place des informations multimédia non communiqués.

En outre, les informations préenregistrées sont sélectionnées en fonction du terminal auxquelles elles sont adressées. Ainsi, le procédé permet de substituer aux informations multimédia des informations préenregistrées qui sont adaptées aux utilisateurs qui subissent la séquence en mode restreint.

Les informations préenregistrées peuvent être de tous types, notamment audio ou vidéo, fixe ou interactive, à but commercial ou informatif. Selon une réalisation, le procédé prévoit de communiquer des informations préenregistrées qui sont de même type que celles suspendues lors de la séquence en mode restreint (une vidéo sans audio en cas de séquence « video mute » et une vidéo avec audio en cas de séquence « hold »)

En particulier, les informations préenregistrées sont communiquées à un terminal en fonction de l'utilisateur dudit terminal, de la langue dudit utilisateur, des préférences dudit utilisateur. En outre, les informations préenregistrées peuvent également être sélectionnées en fonction de la nature de la séquence de communication en mode restreint au cours de laquelle elles doivent être communiquées.

Pour ce faire, le procédé peut prévoir, préalablement à la communication, que chaque utilisateur d'un terminal enregistre des informations en fonction des autres utilisateurs et/ou de la nature des séquences en mode restreint qui sont disponibles. Ainsi, lors de l'activation d'une séquence en mode restreint, le terminal communique automatiquement à chaque autre utilisateur l'information préenregistrée qui lui est destinée.

En variante, les informations préenregistrées peuvent être automatiquement adressées à un utilisateur en fonction d'un profil par lequel il est identifié dans le réseau de communication. En particulier, l'information préenregistrée peut être communiquée automatiquement dans la langue d'un utilisateur tel que définie dans son profil.

Dans cette variante, lors de l'enregistrement des informations par un utilisateur, celui-ci peut avoir à choisir entre un adressage d'une information de façon manuelle ou de façon automatique.

Dans un exemple de réalisation, le profil peut contenir :
- une description de l'utilisateur : langue, préférences,... ;
- une description du type d'informations à communiquer en fonction de la nature de la communication en mode restreint ;
- des critères tenant compte des caractéristiques de l'utilisateur destiné à recevoir ces informations.

Ainsi, l'ensemble de ces profils pourra être connu par le réseau de communication qui saura, en fonction des caractéristiques de chaque utilisateur et de la nature de la communication en mode restreint, communiquer le contenu le plus adapté à chacun des utilisateurs.

## Revendications

1. Procédé de communication d'informations multimédia entre aux moins deux terminaux connectés à un réseau, ledit procédé prévoyant ;
- au moins une séquence de communication en mode restreint dans laquelle au moins une des informations multimédia n'est pas communiquée ; et, en cas d'activation de la séquence de communication en mode restreint d'au moins un terminal, de :
- communiquer à au moins un autre terminal des informations préenregistrées à la place des informations multimédia non communiquées ;
dans lequel les informations préenregistrées sont sélectionnées en fonction du terminal auxquelles elles sont adressées.

2. Procédé de communication selon la revendication 1, dans lequel les informations préenregistrées sont communiquées à un terminal en fonction de l'utilisateur dudit terminal, de la langue dudit utilisateur, des préférences dudit utilisateur.

3. Procédé de communication selon la revendication 1 ou 2, dans lequel les informations préenregistrées sont également sélectionnées en fonction de la nature de la séquence de communication en mode restreint au cours de laquelle elles doivent être communiquées.

4. Procédé de communication selon l'une quelconque des revendications 1 à 3, dans lequel, préalablement à la communication, plusieurs informations sont enregistrées par l'utilisateur d'un terminal en fonction des utilisateurs des autres terminaux.

5. Procédé de communication selon l'une quelconque des revendications 1 à 4, prévoyant une séquence de communication dans laquelle l'information vidéo n'est pas communiquée.

6. Procédé de communication selon l'une quelconque des revendications 1 à 5, prévoyant une séquence de communication dans laquelle aucune information multimédia n'est communiquée.
